# FASCICULE DE BREVET EUROPEEN

(11) **EP 2 462 383 B1**
(45) Date de publication et mention de la délivrance du brevet: **26.12.2018**
(21) Numéro de dépôt: 10739910.7
(22) Date de dépôt: 02.08.2010
(51) Int. Cl.: F23R 3/06, F23R 3/50, F23J 15/00

(54) **CHAMBRE DE COMBUSTION DE TURBOMACHINE COMPRENANT DES ORIFICES D'ENTRÉE D'AIR AMÉLIORÉS**
BRENNKAMMER FÜR EINEN TURBINENMOTOR MIT VERBESSERTEN LUFTEINLÄSSEN
COMBUSTION CHAMBER FOR A TURBINE ENGINE HAVING IMPROVED AIR INLETS

(30) Priorité: 04.08.2009 FR 0955490
(43) Date de publication de la demande: 13.06.2012
(73) Titulaire: Safran Aircraft Engines, 75015 Paris (FR)
(72) Inventeur: SANDELIS, Denis, Jean, Maurice, F-77370 Nangis (FR)
(74) Mandataire: Ilgart, Jean-Christophe
(86) Numéro de dépôt international: PCT/EP2010/061180
(87) Numéro de publication internationale: WO 2011/015543

(56) Documents cités:
- EP-A2- 2 065 644
- DE-A1- 2 932 318
- FR-A- 1 037 635
- JP-A- 54 049 409
- JP-A- 60 194 234
- US-A- 2 543 755
- US-A- 2 664 702
- US-A- 4 133 633
- US-A- 4 621 499
- US-A- 5 050 385

## Description

### DOMAINE TECHNIQUE

La présente invention se rapporte au domaine des turbomachines, telles que les turbomachines d'aéronef, et concerne plus particulièrement les chambres annulaires de combustion des turbomachines.

### ÉTAT DE LA TECHNIQUE ANTÉRIEURE

Les turbomachines comprennent au moins une turbine agencée en sortie d'une chambre de combustion pour extraire de l'énergie d'un flux primaire de gaz éjectés par cette chambre de combustion et entraîner un compresseur disposé en amont de la chambre de combustion et alimentant cette chambre en air sous pression.

Les chambres de combustion des turbomachines comprennent typiquement deux parois annulaires coaxiales, respectivement radialement interne et radialement externe, qui s'étendent de l'amont vers l'aval, selon le sens d'écoulement du flux primaire de gaz dans la turbomachine, autour de l'axe des chambres de combustion, et qui sont reliées entre elles à leur extrémité amont par une paroi annulaire de fond de chambre qui s'étend sensiblement radialement autour de l'axe précité. Cette paroi annulaire de fond de chambre est équipée d'une rangée annulaire de systèmes d'injection régulièrement répartis autour de cet axe pour permettre une amenée d'air et de carburant dans la chambre de combustion.

Les systèmes d'injection comprennent en général des moyens de support de tête d'injecteur de carburant pourvus de moyens aérodynamiques d'injection d'air et de vaporisation du carburant sous forme de fines gouttelettes dans la chambre de combustion.

En fonctionnement, un système d'injection de ce type génère typiquement une nappe d'un mélange d'air et de carburant de forme générale tronconique autour d'un axe central du système d'injection. La concentration maximale en carburant est plus particulièrement localisée sur un tronc de cône de sommet localisé sensiblement en entrée du système d'injection et de demi-angle au sommet compris entre 30 et 40 degrés environ. Le profil de la nappe est sensiblement constant aux régimes de fonctionnement normaux allant du régime de ralenti au régime de plein gaz.

D'une manière générale, les chambres de combustion se décomposent en une région interne amont, couramment appelée zone primaire, et une région interne aval, couramment appelée zone de dilution.

Les documents US2543755 et US5050385 décrivent des chambres de combustion de turbomachine comprenant des orifices d'entrée d'air implantés sur des parois latérales.

La zone primaire d'une chambre de combustion est prévue pour la combustion du mélange d'air et de carburant dans des proportions sensiblement stoechiométriques. A cette fin, l'air est injecté dans cette zone non seulement par les systèmes d'injection mais aussi par des premiers orifices, couramment appelés orifices primaires, ménagés dans les parois annulaires de la chambre autour de la zone primaire de cette dernière.

La zone de dilution est prévue pour la dilution et le refroidissement des gaz provenant de la combustion dans la zone primaire, et pour conférer au flux de ces gaz un profil thermique optimal en vue de son passage dans la turbine montée en aval de la chambre de combustion. Pour cela, les parois annulaires de la chambre de combustion comportent des seconds orifices d'entrée d'air, couramment appelés orifices de dilution.

Les performances des chambres de combustion dépendent notamment de la qualité de la combustion dans la zone primaire de ces chambres.

Or, dans les chambres de combustion de type connu, le mélange d'air et de carburant demeure en général dans la zone primaire pendant un temps qui n'est pas suffisamment long pour permettre une combustion complète.

De plus, le profil de température des gaz de combustion en sortie de ces chambres de combustion n'est pas suffisamment homogène pour permettre un fonctionnement optimal des turbines associées à ces chambres de combustion. Cela provient notamment de l'inhomogénéité de la concentration en carburant dans la zone primaire de ces chambres.

### EXPOSÉ DE L'INVENTION

L'invention a notamment pour but d'apporter une solution simple, économique et efficace à ces problèmes.

Elle propose à cet effet une chambre de combustion de turbomachine selon l'objet de la revendication 1.

La forme des orifices d'entrée d'air du premier type permet de conférer au front amont du flux d'air injecté par ces orifices un profil sensiblement concave, vu depuis l'amont, qui permet d'induire un effet de barrière réfléchissante vis-à-vis des gaz s'écoulant de l'amont vers l'aval dans la chambre de combustion.

Cela permet de favoriser des phénomènes de recirculation de ces gaz, qui sont de nature à améliorer les réactions de combustion se produisant dans la chambre de combustion et donc les performances de cette dernière, et à rendre plus homogène la température des gaz en sortie de cette chambre de combustion.

De plus, cela peut rendre possible une diminution du nombre et/ou de la surface globale des orifices d'entrée d'air des parois coaxiales de la chambre de combustion.

On associe dans ce qui suit chaque orifice d'entrée d'air au système d'injection le plus proche de cet orifice, ou en cas d'égalité de distances, aux deux systèmes d'injection les plus proches dudit orifice.

Dans un mode de réalisation préféré de l'invention, le bord amont de la projection orthogonale de chacun des orifices du premier type est en forme de demi-ellipse. Ce bord amont peut en particulier être en forme de demi-cercle.

En variante, ce bord amont peut avoir la forme d'une ligne polygonale.

Les orifices du premier type sont de préférence conformés de sorte que la projection orthogonale de chacun de ces orifices présente en outre un bord aval qui est de forme convexe lorsqu'il est vu depuis l'aval.

Cela permet de réduire la surface des orifices et donc de concentrer le flux d'air injecté par ceux-ci, sans réduire sensiblement l'effet de barrière réfléchissante induit par ce flux d'air. Il en résulte ainsi une utilisation plus efficace de l'air injecté par ces orifices.

Dans le mode de réalisation préféré de l'invention, le bord aval précité est en forme de demi-ellipse. Comme le bord amont, ce bord aval peut en particulier être en forme de demi-cercle.

En variante, ce bord amont peut également avoir la forme d'une ligne polygonale.

Dans le mode de réalisation préféré de l'invention, les bords amont et aval de la projection de chacun des orifices du premier type sont concentriques.

Les orifices du premier type comprennent avantageusement des orifices primaires formés autour d'une région amont de la chambre de combustion, couramment appelée zone primaire.

Ces orifices primaires permettent, en induisant un effet de barrière réfléchissante comme expliqué ci-dessus, de favoriser la recirculation du mélange d'air et de carburant dans la zone primaire de la chambre de combustion, et ainsi d'améliorer d'une manière considérable les réactions de combustion de ce mélange.

Les orifices primaires associés à chaque système d'injection sont de préférence au nombre de deux et agencés symétriquement par rapport au plan axial correspondant. Selon l'invention et de manière connue en soi, chacun des systèmes d'injection est configuré pour émettre une nappe de carburant et d'air mélangés présentant une région de concentration maximale en carburant sensiblement localisée sur un tronc de cône de révolution centré sur l'axe central du système d'injection et ayant un sommet situé à l'entrée de ce système d'injection.

La forme de la nappe du mélange d'air et de carburant associée à chaque système d'injection peut être déterminée de manière expérimentale par des techniques bien connues telles que l'analyse de particules par méthode phase Doppler, couramment appelée PDPA *(Phase Doppler Particule Analysis).* Lors de la conception d'une chambre de combustion selon l'invention, la forme de la nappe correspondant à une géométrie donnée de chambre de combustion peut aussi être déterminée par des méthodes numériques de simulation, également connues de l'homme du métier. Selon l'invention, la projection orthogonale de chacun des orifices primaires du premier type sur le plan de projection correspondant est interceptée par une droite correspondante résultant de l'intersection du tronc de cône précité avec ce plan de projection.

De cette manière, le flux d'air injecté par chacun de ces orifices peut intercepter la région de concentration maximale en carburant de la nappe correspondante en s'écoulant sensiblement tangentiellement à cette région de la nappe, de sorte que l'effet de barrière réfléchissante produit par ce flux d'air peut être rendu plus efficace.

La projection orthogonale de chacun des orifices primaires du premier type sur le plan de projection correspondant présente de préférence un axe de symétrie qui fait, avec la droite correspondante résultant de l'intersection du tronc de cône avec le plan de projection, un angle compris entre -5 degrés et 5 degrés.

La barrière formée par l'air injecté par chacun de ces orifices est ainsi orientée sensiblement perpendiculairement à la direction locale d'écoulement de la nappe d'air et de carburant provenant du système d'injection correspondant, et favorise ainsi une recirculation du mélange d'air et de carburant sensiblement selon une direction opposée à cette direction locale d'écoulement.

Dans le mode de réalisation préféré de l'invention, l'axe de symétrie de la projection orthogonale de chacun des orifices primaires du premier type sur le plan de projection correspondant coïncide sensiblement avec la droite correspondante qui résulte de l'intersection dudit tronc de cône avec ce plan de projection.

Cet agencement de ces orifices permet au flux d'air injecté par ceux-ci de circuler au plus près de la région de concentration maximale en carburant de la nappe correspondante, de manière à maximiser l'efficacité de l'effet de barrière réfléchissante produit par ce flux d'air.

Dans le mode de réalisation préféré de l'invention, les orifices primaires de la chambre de combustion sont tous des orifices du premier type.

En variante, ces orifices primaires peuvent comprendre un ensemble d'orifices du premier type et d'orifices d'un type conventionnel.

Par ailleurs, la pluralité d'orifices d'entrée d'air comprend avantageusement des orifices de dilution formés autour d'une région aval de la chambre de combustion, couramment appelée zone de dilution, et dont certains au moins sont des orifices d'un deuxième type ayant une forme allongée selon une direction perpendiculaire à l'axe longitudinal de la chambre de combustion.

La forme allongée des orifices de dilution du deuxième type permet d'améliorer l'efficacité et l'homogénéité du refroidissement des gaz dans la zone de dilution dû à l'air injecté dans cette zone par ces orifices.

Les orifices de dilution du deuxième type peuvent en outre induire un effet de barrière vis-à-vis de ces gaz, le cas échéant à l'encontre d'une partie de ces gaz qui aurait contourné l'air injecté par d'éventuels orifices primaires dans la zone primaire de la chambre de combustion, de manière à ralentir l'écoulement de ces gaz.

De manière complémentaire ou en variante, les orifices de dilution peuvent comprendre des orifices du premier type tels que décrits ci-dessus, et/ou des orifices d'un type conventionnel.

L'invention concerne également une turbomachine, comprenant une chambre de combustion du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en coupe axiale d'une chambre de combustion dans une turbomachine selon l'invention ;
- la figure 2 est une vue schématique partielle en projection orthogonale sur le plan A-A de la figure 1, de la chambre de combustion de cette figure 1 ;
- la figure 3 est une vue schématique partielle en coupe transversale de la chambre de combustion de la figure 1, selon le plan C-C de la figure 2.

### EXPOSÉ DÉTAILLÉ D'UN MODE DE RÉALISATION PREFERE

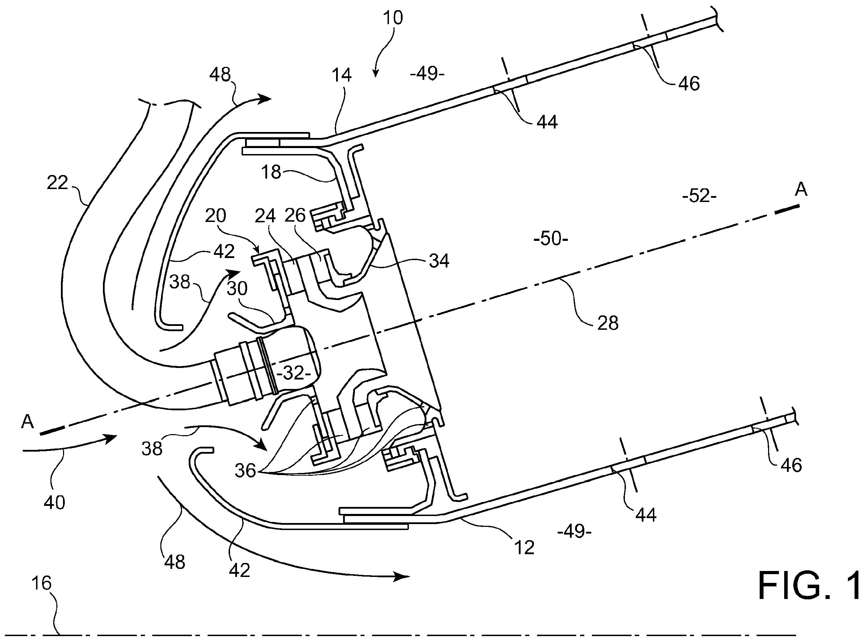

La figure 1 représente une partie d'une turbomachine, telle qu'un turboréacteur d'avion, et illustre plus particulièrement une partie d'une chambre annulaire de combustion 10 de cette turbomachine.

D'une manière bien connue, la chambre de combustion 10 est montée en aval d'un compresseur de la turbomachine destiné à alimenter cette chambre en air sous pression, et en amont d'une turbine de cette turbomachine, destinée à entraîner en rotation le compresseur précité sous l'effet de la poussée des gaz provenant de la chambre de combustion, ce compresseur et cette turbine n'étant pas représentés sur la figure 1.

La chambre de combustion 10 comprend deux parois annulaires coaxiales, respectivement radialement interne 12 et radialement externe 14, qui s'étendent autour de l'axe longitudinal 16 de la chambre de combustion.

Ces deux parois annulaires 12 et 14 sont fixées en aval à des carters de la chambre (non visibles sur la figure 1), et sont reliées l'une à l'autre à leur extrémité amont par une paroi annulaire de fond de chambre 18, de manière connue.

La paroi annulaire de fond de chambre 18 comporte une rangée annulaire d'orifices régulièrement répartis autour de l'axe 16 de la chambre de combustion, et dans lesquels sont montés des systèmes d'injection 20 associés à une rangée annulaire d'injecteurs de carburant 22.

Chaque système d'injection 20 comporte deux vrilles de turbulence 24 et 26 qui s'étendent coaxialement autour de l'axe 28 du système d'injection et qui sont reliées en amont à des moyens 30 de centrage et de guidage d'une tête 32 de l'injecteur 22 correspondant, et en aval à un bol mélangeur 34 monté dans l'orifice correspondant de la paroi de fond de chambre 18.

Chaque système d'injection 20 comporte au niveau de ses vrilles de turbulence 24 et 26, de ses moyens 30 de centrage et de guidage de tête d'injecteur, et de son bol mélangeur 34, des orifices 36 destinés à l'injection, dans la chambre de combustion, d'une partie 38 du flux d'air 40 provenant du compresseur de la turbomachine.

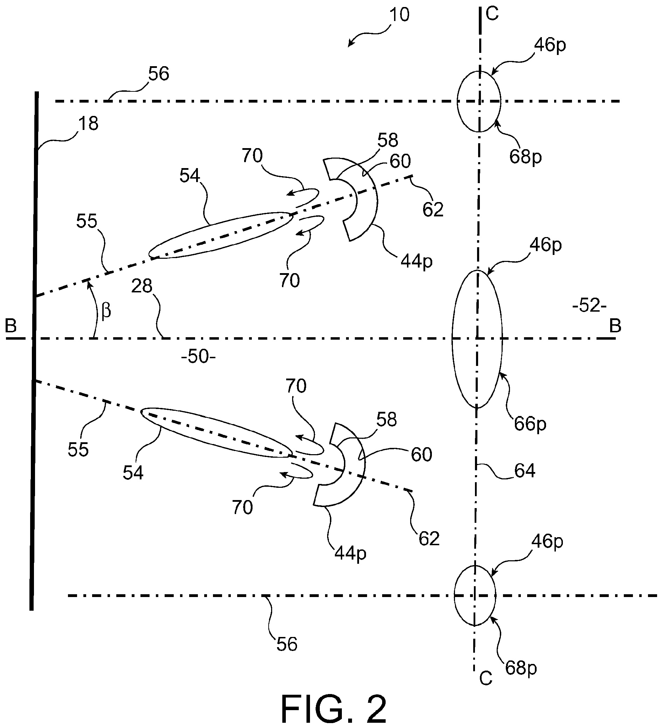

Comme cela apparaîtra plus clairement dans les explications qui suivent en référence à la figure 2, chaque système d'injection 20 est conçu pour pulvériser dans la chambre de combustion un mélange d'air et de fines gouttelettes de carburant sous la forme d'une nappe de forme générale tronconique, présentant en particulier une région de concentration maximale en carburant sensiblement localisée sur un tronc de cône centré sur l'axe 28 du système d'injection, de sommet localisé sensiblement au niveau de l'entrée de ce système d'injection, et de demi-angle au sommet β par exemple égal à 35 degrés environ et typiquement compris entre 30 et 40 degrés.

Par ailleurs, les parois annulaires 12 et 14 de la chambre de combustion sont reliées à leur extrémité amont à un carénage annulaire 42 (figure 1) qui est par exemple du type monobloc comportant des orifices alignés avec les systèmes d'injection 20 pour le passage des injecteurs 22 et du flux d'air 38. Ce carénage a pour fonctions principales la protection de la paroi de fond de chambre 18 et la canalisation du flux d'air 38. En variante et de manière connue, ce carénage 42 peut être formé de deux parties distinctes, respectivement radialement interne et radialement externe.

Chacune des parois annulaires 12 et 14 comporte en outre deux rangées annulaires d'orifices d'entrée d'air 44 et 46 ouverts radialement vers l'extérieur par rapport à l'axe 16 de la chambre de combustion, et destinés à l'injection dans cette chambre de combustion d'une partie 48 du flux d'air 40. En fonctionnement, cette partie 48 du flux d'air 40 peut atteindre les orifices d'entrée d'air 44 et 46 en circulant vers l'aval dans un espace annulaire de contournement 49 ménagé entre les parois annulaires 12 et 14 de la chambre de combustion d'une part, et les carters correspondants de cette chambre (non visibles sur la figure 1) d'autre part.

Une première de ces rangées d'orifices est formée autour d'une région amont 50 de la chambre de combustion couramment appelée zone primaire, dans laquelle ont lieu en fonctionnement les réactions de combustion du mélange d'air et de carburant. Les orifices 44 de cette première rangée sont pour cette raison couramment appelés orifices primaires.

La deuxième rangée d'orifices est formée en aval autour d'une région 52 de la chambre couramment appelée zone de dilution, dans laquelle les gaz de combustion sont dilués et refroidis. Les orifices 46 de cette deuxième rangée sont pour cette raison couramment appelés orifices de dilution.

La figure 2 représente des orifices d'entrée d'air de la paroi annulaire externe 14, ainsi que la région 54 de concentration maximale en carburant de la nappe produite par un système d'injection 20 et le tronc de cône 55 sur lequel cette région 54 est sensiblement localisée, en projection orthogonale sur le plan A-A de la figure 1, qui passe par l'axe 28 du système d'injection 20 et qui est perpendiculaire au plan de la figure 1, c'est-à-dire au plan axial passant par l'axe 28 du système d'injection précité et par l'axe 16 de la chambre de combustion, ce dernier plan étant symbolisé par la ligne B-B sur la figure 2, et les projections des orifices primaires et de dilution étant désignées respectivement par les références 44p et 46p sur cette figure. Il est à noter que le plan A-A de la figure 1 est associé au système d'injection 20 représenté sur cette figure.

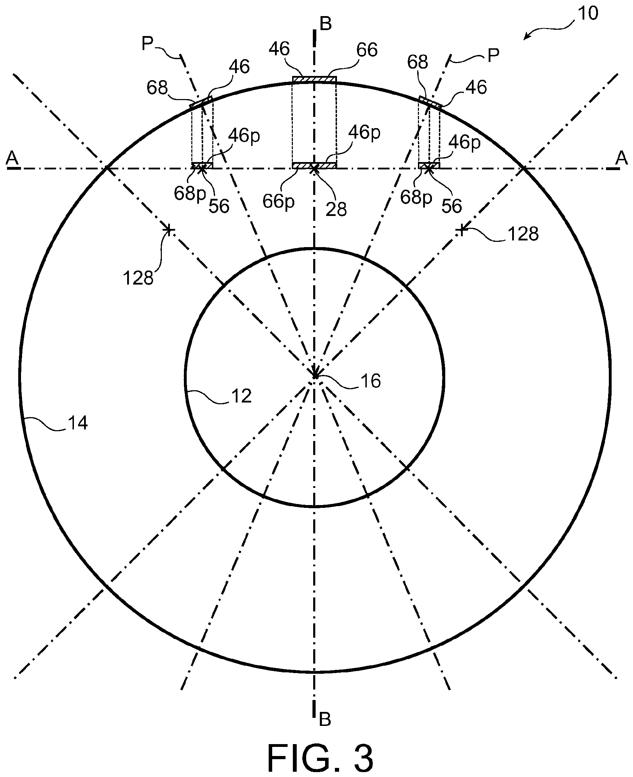

La figure 3 illustre la projection orthogonale dans le plan A-A de deux orifices de dilution 46 de la paroi externe 14.

Par ailleurs, comme le montre plus particulièrement cette figure 3, chacune des deux droites 56 visibles sur les figures 2 et 3 représente la projection dans le plan A-A de l'intersection de la paroi annulaire externe 14 de la chambre de combustion avec un plan P qui passe par l'axe 16 de cette chambre de combustion et qui est situé angulairement à mi-distance entre l'axe 28 du système d'injection 20 et l'axe 128 de l'un des deux systèmes d'injection directement consécutifs de ce système d'injection 20 sur la paroi de fond de chambre 18.

Les orifices d'entrée d'air 44 et 46, dont les projections respectives 44p et 46p dans le plan A-A sont situées entre les deux axes 56, peuvent donc être associés au système d'injection 20 qui constitue le système d'injection le plus proche de ces orifices (figure 2).

Les orifices primaires 44 associés au système d'injection 20 sont au nombre de deux et sont des orifices d'un premier type dont la projection orthogonale 44p dans le plan A-A présente un bord amont 58 et un bord aval 60 qui sont de forme convexe lorsqu'ils sont vus depuis l'aval.

Plus précisément, ces bords amont 58 et aval 60 ont chacun la forme d'un demi-cercle et sont agencés de manière concentrique de sorte que la projection 44p de chaque orifice primaire 44 présente un axe de symétrie confondu avec une droite 62 correspondante résultant de l'intersection du tronc de cône 55 avec le plan de projection A-A.

Les orifices de dilution 46 associés au système d'injection 20 sont des orifices d'un deuxième type qui ont une forme allongée selon une direction 64 perpendiculaire à l'axe 28 du système d'injection 20.

Ces orifices de dilution 46 comprennent un orifice 66, dont la projection 66p dans le plan A-A est centrée sur l'axe 28 du système d'injection 20, et qui forme ainsi un orifice de dilution principal associé à ce système d'injection 20, ainsi que deux orifices de dilution secondaires 68, dont les projections 68p dans le plan A-A sont centrées sur les axes 56, et qui sont donc situés à égale distance de deux systèmes d'injection consécutifs de la paroi de fond de chambre 18.

L'orifice de dilution principal 66 a pour plan de symétrie le plan B-B tandis que les orifices de dilution secondaires 68 ont pour plans de symétrie respectifs les plans axiaux P situés angulairement à mi-distance entre les axes 28 et 128 respectifs de deux systèmes d'injection consécutifs (figure 3).

Les orifices de dilution secondaires 68 étant situés à égale distance de deux systèmes d'injection consécutifs de la paroi de fond de chambre 18, comme cela a été expliqué ci-dessus, il est à noter que chacun de ces orifices est associé aux deux systèmes d'injection correspondants.

Dans le mode de réalisation préféré de l'invention, les orifices d'entrée d'air de la paroi annulaire interne 12 sont configurés de la même manière que les orifices de la paroi externe 14.

En fonctionnement, les orifices primaires 44 permettent, du fait de leur forme, d'induire un effet de barrière réfléchissante particulièrement efficace vis-à-vis du mélange d'air et de carburant s'écoulant vers l'aval dans la zone primaire 50 de la chambre de combustion, ce qui permet de favoriser des phénomènes de recirculation vers l'amont de ce mélange, comme l'illustrent les flèches 70 sur la figure 2.

Les orifices de dilution 46 permettent un refroidissement efficace et homogène des gaz provenant de la zone primaire 50.

L'invention permet d'une manière générale d'améliorer les performances de la chambre de combustion, comme cela a été expliqué ci-dessus.

## Revendications

1. Chambre de combustion (10) de turbomachine, comprenant une paroi annulaire de fond de chambre (18) équipée de systèmes d'injection (20) régulièrement répartis autour d'un axe longitudinal (16) de la chambre de combustion et dont chacun présente un axe central (28, 128) d'émission de carburant, la chambre de combustion (10) comprenant également deux parois annulaires coaxiales, respectivement interne (12) et externe (14), reliées entre elles par ladite paroi de fond de chambre (18) et comportant une pluralité d'orifices d'entrée d'air (44, 46) formés sur au moins l'une desdites parois annulaires (12, 14) et ouverts radialement vers l'extérieur par rapport à l'axe (16) de la chambre de combustion, dans laquelle ladite pluralité d'orifices d'entrée d'air comprend des orifices (44) d'un premier type conformés de sorte que la projection orthogonale (44p) de chacun de ces orifices sur un plan de projection (A-A) correspondant, qui passe par l'axe central (28) du système d'injection (20) le plus proche dudit orifice et qui est perpendiculaire à un plan axial (B-B) correspondant passant conjointement par ledit axe central (28) et par l'axe longitudinal (16) de la chambre de combustion, présente un bord amont (58) qui est de forme convexe lorsqu'il est vu depuis l'aval, dans laquelle lesdits orifices du premier type comprennent des orifices primaires (44) formés autour d'une région amont (50) de la chambre de combustion, **caractérisée en ce que**, chacun desdits systèmes d'injection (20) étant configuré pour émettre une nappe de carburant et d'air mélangés présentant une région (54) de concentration maximale en carburant sensiblement localisée sur un tronc de cône de révolution (55) centré sur l'axe central (28) dudit système d'injection (20) et ayant un sommet localisé à l'entrée dudit système d'injection (20), la projection orthogonale (44p) de chacun desdits orifices primaires du premier type (44) sur ledit plan de projection (A-A) correspondant est interceptée par une droite (62) correspondante résultant de l'intersection dudit tronc de cône (55) correspondant avec ledit plan de projection (A-A).

2. Chambre de combustion selon la revendication 1, **caractérisée en ce que** ledit bord amont (58) de la projection orthogonale (44p) de chacun desdits orifices du premier type (44) est en forme de demi-ellipse.

3. Chambre de combustion selon la revendication 1 ou 2, **caractérisée en ce que** lesdits orifices du premier type (44) sont conformés de sorte que ladite projection orthogonale (44p) de chacun de ces orifices présente en outre un bord aval (60) qui est de forme convexe lorsqu'il est vu depuis l'aval.

4. Chambre de combustion selon la revendication 3, **caractérisée en ce que** ledit bord aval (60) de la projection orthogonale (44p) de chacun desdits orifices du premier type (44) est en forme de demi-ellipse.

5. Chambre de combustion selon l'une quelconque des revendications 1 à 4, **caractérisée en ce que** la projection orthogonale (44p) de chacun desdits orifices primaires du premier type (44) sur ledit plan de projection (A-A) correspondant présente un axe de symétrie qui fait, avec ladite droite (62) correspondante résultant de l'intersection dudit tronc de cône (55) avec ledit plan de projection (A-A), un angle compris entre -5 degrés et 5 degrés.

6. Chambre de combustion selon la revendication 5, **caractérisée en ce que** l'axe de symétrie de la projection orthogonale (44p) de chacun desdits orifices primaires du premier type (44) sur ledit plan de projection (A-A) correspondant coïncide sensiblement avec ladite droite (62) correspondante résultant de l'intersection dudit tronc de cône (55) avec ledit plan de projection (A-A).

7. Chambre de combustion selon l'une quelconque des revendications 1 à 6, **caractérisée en ce que** ladite pluralité d'orifices d'entrée d'air comprend des orifices de dilution formés autour d'une région aval (52) de la chambre de combustion, et dont certains au moins sont des orifices d'un deuxième type (46) ayant une forme allongée selon une direction (64) perpendiculaire à l'axe longitudinal (16) de la chambre de combustion.

8. Turbomachine, **caractérisée en ce qu'**elle comprend une chambre de combustion (10) selon l'une quelconque des revendications précédentes.

## Patentansprüche

1. Brennkammer (10) von Turbotriebwerken mit einer ringförmigen Kammerbodenwand (18), die mit Einspritzsystemen (20) ausgerüstet ist, die in regelmäßigen Abständen um eine Längsachse (16) der Brennkammer herum verteilt sind und von denen jede eine Mittelachse (28, 128) der Brennstoff-Emission aufweist, wobei die Brennkammer (10) ferner zwei koaxiale, ringförmige Wände aufweist, eine Innenwand (12) und eine Außenwand (14), die durch die genannte Kammerbodenwand (18) miteinander verbunden sind und eine Vielzahl von Lufteinlassöffnungen (44, 46) enthalten, die in wenigstens einer dieser ringförmigen Wände (12, 14) gebildet sind und in radialer Richtung nach außen offen sind, bezogen auf die Achse (16) der Brennkammer, wobei diese Vielzahl von Lufteinlassöffnungen Öffnungen (44) eines ersten Typs umfasst, die dergestalt geformt sind, dass die senkrechte Projektion (44p) jeder dieser Öffnungen auf eine zugeordnete Projektionsebene (A-A), die durch die Mittelachse (28) des dieser Öffnung am nächsten liegenden Einspritzsystems (20) verläuft und die senkrecht auf einer entsprechenden axialen Ebene (B-B) steht, die sowohl durch die genannte Mittelachse (28) wie auch durch die Längsachse (16) der Brennkammer verläuft, einen in Strömungsrichtung vorderen Rand (58) aufweist, der von hinten betrachtet eine konvexe Form hat, wobei diese Öffnungen des ersten Typs Primäröffnungen (44) umfassen, die um einen in Strömungsrichtung vorderen Bereich (50) der Brennkammer herum gebildet sind,
**dadurch gekennzeichnet,**
**dass** in Anbetracht dessen, dass jedes der genannten Einspritzsysteme (20) so ausgeführt ist, dass es einen Mischstrahl von Brennstoff und Luft abgibt, der einen Bereich (54) maximaler Konzentration an Brennstoff aufweist, der im Wesentlichen auf einem umlaufenden Kegelstumpf (55) lokalisiert ist, welcher auf der Mittelachse (28) des Einspritzsystems (20) zentriert ist und eine Spitze hat, die am Einlass dieses Einspritzsystems (20) lokalisiert ist, die senkrechte Projektion (44p) jeder der genannten Primäröffnungen (44) des ersten Typs auf die genannte zugeordnete Projektionsebene (A-A) durch eine entsprechende Gerade (62) erfasst wird, die sich aus der Verschneidung des genannten entsprechenden Kegelstumpfs (55) und der genannten Projektionsebene (A-A) ergibt.

2. Brennkammer nach Anspruch 1,
**dadurch gekennzeichnet,**
**dass** der genannte in Strömungsrichtung vordere Rand (58) der senkrechten Projektion (44p) jeder der genannten Öffnungen des ersten Typs (44) die Form einer Halbellipse hat.

3. Brennkammer nach Anspruch 1 oder 2,
**dadurch gekennzeichnet,**
**dass** die genannten Öffnungen des ersten Typs (44) so geformt sind, dass die senkrechte Projektion (44p) jeder dieser Öffnungen ferner einen in Strömungsrichtung hinteren Rand (60) aufweist, der von hinten betrachtet eine konvexe Form hat.

4. Brennkammer nach Anspruch 3,
**dadurch gekennzeichnet,**
**dass** der genannte in Strömungsrichtung hintere Rand (60) der senkrechten Projektion (44p) jeder der genannten Öffnungen des ersten Typs (44) die Form einer Halbellipse hat.

5. Brennkammer nach einem der Ansprüche 1 bis 4,
**dadurch gekennzeichnet,**
**dass** die senkrechte Projektion (44p) jeder der genannten Primäröffhungen des ersten Typs (44) auf die genannte zugeordnete Projektionsebene (A-A) eine Symmetrieachse aufweist, die mit der genannten entsprechenden Geraden (62), die sich aus der Verschneidung des genannten Kegelstumpfs (55) und der genannten Projektionsebene (A-A) ergibt, einen Winkel von -5 Grad bis 5 Grad bildet.

6. Brennkammer nach Anspruch 5,
**dadurch gekennzeichnet,**
**dass** sich die Symmetrieachse der senkrechten Projektion (44p) jeder der genannten Primäröffnungen des ersten Typs (44) auf die genannte zugeordnete Projektionsebene (A-A) mit der genannten entsprechenden Geraden (62), die sich aus der Verschneidung des genannten Kegelstumpfs (55) und der genannten Projektionsebene (A-A) ergibt, im Wesentlichen deckt.

7. Brennkammer (8) nach einem der Ansprüche 1 bis 6,
**dadurch gekennzeichnet,**
**dass** die genannte Vielzahl von Lufteinlassöffnungen Verdünnungsöffnungen (44) umfasst, die um einen in Strömungsrichtung hinteren Bereich (52) der Brennkammer gebildet sind, und von denen zumindest manche Öffnungen eines zweiten Typs (46) sind, die eine längliche Form in einer Richtung (64) haben, die senkrecht zur Längsachse (16) der Brennkammer verläuft.

8. Turbotriebwerk
**dadurch gekennzeichnet,**
**dass** es eine Brennkammer (10) nach einem der vorherigen Ansprüche aufweist.

## Claims

1. A combustion chamber (10) for a turbomachine, including an annular end wall (18) fitted with injection systems (20) regularly distributed around a longitudinal axis (16) of the combustion chamber, each of which has a central fuel emission axis (28, 128), where the combustion chamber (10) also includes two coaxial annular walls, which are respectively an internal annular wall (12) and an external annular wall (14), connected to one another by said end wall (18) and including a plurality of air inlets (44, 46) formed on at least one of the said annular walls (12, 14) and open radially towards the outside relative to the axis (16) of the combustion chamber, wherein said plurality of air inlets includes inlets (44) of a first type shaped such that the orthogonal projection (44p) of each of these inlets in a corresponding projection plane (A-A), which passes through the central axis (28) of the injection system (20) closest to said inlet, and which is perpendicular to a corresponding axial plane (B-B) passing jointly through said central axis (28) and through the longitudinal axis (16) of the combustion chamber, has an upstream edge (58) which is of convex shape when seen from downstream, wherein said inlets of the first type include primary inlets (44) formed around an upstream region (50) of the combustion chamber, **characterised in that**, each of said injection systems (20) being configured to emit a layer of blended fuel and air having a region (54) of maximum fuel concentration located roughly on a truncated cone (55) of revolution centred on the central axis (28) of said injection system (20) and having an apex located at the entrance of said injection system (20), the orthogonal projection (44p) of each of said primary inlets of the first type (44) in said corresponding projection plane (A-A) is intercepted by a corresponding straight line (62) resulting from the intersection of said corresponding truncated cone (55) with said projection plane (A-A).

2. A combustion chamber according to claim 1, **characterised in that** said upstream edge (58) of the orthogonal projection (44p) of each of said inlets of the first type (44) has a half-ellipse shape.

3. A combustion chamber according to claim 1 or 2, **characterised in that** said inlets of the first type (44) are shaped such that said orthogonal projection (44p) of each of these inlets also has a downstream edge (60) which is of convex shape when seen from downstream.

4. A combustion chamber according to claim 3, **characterised in that** said downstream edge (60) of the orthogonal projection (44p) of each of said inlets of the first type (44) has a half-ellipse shape.

5. A combustion chamber according to any one of claims 1 to 4, **characterised in that** the orthogonal projection (44p) of each of said primary inlets of the first type (44) in said corresponding projection plane (A-A) has an axis of symmetry forming, with said corresponding straight line (62) resulting from the intersection of said truncated cone (55) with said projection plane (A-A), an angle of between -5 degrees and 5 degrees.

6. A combustion chamber according to claim 5, **characterised in that** the axis of symmetry of the orthogonal projection (44p) of each of said primary inlets of the first type (44) in said corresponding projection plane (A-A) coincides roughly with said corresponding straight line (62) resulting from the intersection of said truncated cone (55) with said projection plane (A-A).

7. A combustion chamber according to any of the claims 1 to 6, **characterised in that** said multiple air inlets include dilution inlets formed around a region (52) downstream of the combustion chamber, some of which at least are inlets of a second type (46) having a lengthened shape in a direction (64) perpendicular to the longitudinal axis (16) of the combustion chamber.

8. A turbomachine, **characterised in that** it includes a combustion chamber (10) according to any of the previous claims.
